# EUROPÄISCHE PATENTSCHRIFT

(11) **EP 3 768 480 B1**
(45) Veröffentlichungstag und Bekanntmachung des Hinweises auf die Patenterteilung: **08.03.2023**
(21) Anmeldenummer: 19711132.1
(22) Anmeldetag: 21.03.2019
(51) Int. Cl.: B28C 7/00, B28C 7/06, B65D 88/16

(54) **SYSTEM ZUR BEREITSTELLUNG VON BAUSTOFFEN**
SYSTEM FOR PROVIDING CONSTRUCTION MATERIALS
SYSTÈME DE FOURNITURE DES MATÉRIAUX DE CONSTRUCTION

(30) Priorität: 21.03.2018 EP 18163024
(43) Veröffentlichungstag der Anmeldung: 27.01.2021
(73) Patentinhaber: SIKA TECHNOLOGY AG, 6340 Baar (CH)
(72) Erfinder: JERNEI, Michael, 6700 Bludenz (AT); KUSTER, Reto, 6207 Nottwil (CH)
(74) Vertreter: Sika Patent Attorneys
(86) Internationale Anmeldenummer: PCT/EP2019/057077
(87) Internationale Veröffentlichungsnummer: WO 2019/180135

(56) Entgegenhaltungen:
- EP-A1- 1 321 262
- DE-U1- 20 209 351
- US-A- 4 953 752
- US-A- 5 415 323

## Beschreibung

Die vorliegende Erfindung betrifft ein System zur Bereitstellung von Baustoffen.

Zur Bereitstellung von Baustoffen, wie beispielsweise Mörtel, werden verschiedene Systeme angewendet. Oftmals werden beispielsweise Säcke mit einer trockenen Zementmischung von Hand in einen Mischer geleert, wo dann unter Zugabe von Wasser der Mörtel angemacht wird. Dies hat den Vorteil, dass mit geringen Kosten gearbeitet werden kann, da nur wenige Maschinen notwendig sind und eine einfache Logistik ausreicht. Nachteilig daran ist es hingegen, dass viel manuelle Arbeit notwendig ist, und dass oftmals eine grössere Staubbelastung entsteht. Zudem ist eine Menge an Baustoff, welcher mit solchen Systemen bereitgestellt werden kann pro Zeiteinheit, üblicherweise gering.

Ein weiteres bekanntes System zur Bereitstellung von Baustoffen, wie beispielsweise Mörtel, ist das Verwenden von Silos. Silos haben den Vorteil, dass dabei grosse Mengen von Baustoffen bereitgestellt werden können, mit vergleichsweise wenig manuellem Arbeitseinsatz. Nachteilig ist es hingegen, dass grosse Investitionen in die Silos einerseits und in ein dichtes Netz an Verteilzentren für die Silos andererseits notwendig sind. Weiterhin ist das Wiederbefüllen solcher Silos kostspielig und aufwendig. Hinzu kommt, dass solche Silos aufgrund ihrer Höhe nur in Hallen oder ausserhalb eines Gebäudes aufgestellt werden können.

Aus EP1321262A1 ist ein mobiles System zur Bereitstellung von Baustoffen nach dem Oberbegriff des Anspruchs 1 bekannt.

Aus DE20209351U1 und US4953752A sind jeweils nicht-mobile System zur Bereitstellung von Baustoffen bekannt.

Es ist somit eine Aufgabe der vorliegenden Erfindung, ein leistungsfähiges System zur Bereitstellung von Baustoffen zur Verfügung zu stellen, welches wenig manuelle Arbeit erfordert, welches eine möglichst reduzierte Logistik erlaubt, und welches in einer Anwendung eine Staubproduktion möglichst vermeidet. Zudem soll das System einen flexiblen und kostengünstigen Einsatz in verschiedenen Arten von Anwendungen ermöglichen.

Diese Aufgabe wird gelöst durch ein System zur Bereitstellung von Baustoffen nach Anspruch 1.

Die hier vorgeschlagene Lösung bietet zunächst den Vorteil, dass sie auch in niedrigen Räumen, wie beispielsweise Garagen oder Häuser, angewendet werden kann. Zudem wird durch das Verwenden einer Hebevorrichtung ein manueller Arbeitsaufwand verringert. Weiterhin kann durch das Positionieren der Verpackung über der Misch- und Fördervorrichtung durch die Hebevorrichtung eine Staubbelastung stark reduziert werden.

Ein Kerngedanke der vorliegenden Erfindung ist es, ein flexibles modulares System einzusetzen, welches mit einem sehr geringen manuellen Arbeitsaufwand auskommt. Durch die Verwendung von entsprechenden Verpackungen und einer entsprechenden Misch- und Fördervorrichtung kann dennoch eine hohe Durchflussrate des Baustoffes erzielt werden. Somit kann mit einfachen Mitteln ein sehr effektives System zur Bereitstellung von Baustoffen bereitgestellt werden.

In einer beispielhaften Ausführungsform ist die erste Komponente ein Trockenprodukt oder eine Trockenmischung und die zweite Komponente ist ein Flüssigprodukt oder eine Flüssigmischung.

In einer beispielhaften Ausführungsform ist der Baustoff Mörtel, insbesondere Mauermörtel, Putzmörtel, Brandschutzmörtel, kunstharzvergüteter Mörtel, Vergussmörtel, Nassspritzmörtel, selbstlaufende Spachtelmasse, Fugenmörtel, Estrichmörtel oder Wassermörtel.

In einer beispielhaften Ausführungsform umfasst die erste Komponente Zement, insbesondere Zement auf einer Bindemittelbasis umfassend Portlandzement, Gips, Kalk, Tonerdeschmelz- oder Sulfoaluminatzement.

In einer beispielhaften Ausführungsform umfasst die zweite Komponente Wasser bzw. Anmachwasser, insbesondere Wasser mit Additiven wie Beschleuniger oder Verzögerer oder Kunststoffvergütungen.

Beispielhafte Beschleuniger sind Beschleuniger auf Basis von Kalziumnitraten, Aluminaten, Aluminiumsulfaten, oder Ethanolaminen.

Beispielhafte Verzögerer sind Verzögerer umfassend Phosphate oder Gluconate.

Beispielhafte Kunststoffvergütungen umfassen Styrol-Butadien-Dispersionen oder Styrol-Acrylat-Dispersionen.

Diese Additive können durch einen Bypass dem Wasser bzw. Anmachwasser kontinuierlich oder diskontinuierlich beigemischt werden.

In einer beispielhaften Ausführungsform beträgt eine Füllhöhe der ersten Komponente zwischen 0,6 und 0,95 der Höhe der Hülle der Verpackung, bevorzugt zwischen 0,65 und 0,85, besonders bevorzugt zwischen 0,7 und 0,8.

Das Vorsehen einer solchen Füllhöhe hat den Vorteil, dass dadurch ein oberster Bereich der Hülle leer und flexibel bleibt, sodass eine Verbindung zwischen der in diesem obersten Bereich der Hülle angebrachten Aufhängevorrichtung und der Hebevorrichtung einfacher herstellbar ist.

In einer beispielhaften Ausführungsform ist die Hebevorrichtung ein Gabelstapler oder ein Hubwagen, insbesondere ein Elektro-Hochhubwagen.

Das Verwenden eines Gabelstaplers als Hebevorrichtung bietet den Vorteil, dass dadurch Verpackungen mit einer für die Anwendung typischen Grösse effizient im Raum verschiebbar sind. Weiterhin stehen Gabelstapler oftmals auf Baustellen zur Verfügung, so dass für das hier vorgeschlagene System keine speziellen Hebevorrichtungen an den Ort der Verwendung transportiert werden müssen. Gabelstapler bieten weiterhin den Vorteil, dass dadurch die Verpackung direkt über die Misch- und Fördervorrichtung positioniert werden kann, ohne dass dabei sehr grosse kranartige Maschinen notwendig wären.

In einer vorteilhaften Ausführungsform umfasst die Hebevorrichtung eine umgekehrte Gabel, so dass die Aufhängevorrichtung an einem höchstliegenden Bereich der Gabel einhängbar ist.

Das Verwenden einer umgekehrten Gabel bietet den Vorteil, dass dadurch die Verpackung auf die notwendige Höhe angehoben werden kann, ohne dass dabei die Hebevorrichtung über diese notwendige Höhe hinausragt. Mit anderen Worten kann dadurch die Verpackung an einem höchstliegenden Bereich der Hebevorrichtung eingehängt werden. Dies erlaubt eine möglichst geringe Gesamthöhe des hier vorgeschlagenen Systems.

In einer beispielhaften Ausführungsform umfasst die umgekehrte Gabel vier Arme, wobei jeweils eine Schlaufe der Aufhängevorrichtung der Verpackung an einem der Arme einhängbar ist.

In einer beispielhaften Weiterbildung sind die Arme der Gabel etwas weiter voneinander beabstandet als die Schlaufen der Aufhängevorrichtung. Dadurch wird die Verpackung in der Tendenz in Richtung ihrer Breite und Tiefe leicht auseinandergezogen.

Eine solche Gabel mit vier Armen hat den Vorteil, dass die Hebevorrichtung bei einer Aufnahme einer neuen Verpackung im Wesentlichen von oben her an die Aufhängevorrichtung der Verpackung herangeführt werden kann. Nachdem die Gabel von oben herab neben den Schlaufen der Aufhängevorrichtung positioniert wird, können die Schlaufen über die Arme der Gabel gelegt werden, ohne dass dabei die Hebevorrichtung bewegt werden muss, weder horizontal noch vertikal. Dies erleichtert die Handhabung von Verpackungen durch die Hebevorrichtung wesentlich, sodass dieser Vorgang ohne weiteres effizient von einer Person durchgeführt werden kann. Insbesondere in engen Räumen ist dies von Vorteil, weil weniger Platz zum Rangieren benötigt wird.

In einer beispielhaften Ausführungsform haben Gabeln der Hebevorrichtung einen Durchmesser zwischen 5 und 20 cm, bevorzugt zwischen 5 und 15 cm, besonders bevorzugt zwischen 7 und 13 cm.

In einer beispielhaften Ausführungsform haben die Gabeln der Hebevorrichtung einen im Wesentlichen runden oder kreisförmigen oder ovalen Querschnitt.

In einer beispielhaften Ausführungsform haben Aufhängeorte der Gabeln der Hebevorrichtung einen Abstand zwischen 60 und 120 cm, bevorzugt zwischen 70 und 110 cm, bevorzugt zwischen 80 und 100 cm, besonders bevorzugt zwischen 85 und 95 cm.

In einer beispielhaften Ausführungsform ist die Gabel lösbar mit der Hebevorrichtung verbunden, beispielsweise durch einen Sicherungsmechanismus, welcher durch einen Hebel geöffnet und verschlossen werden kann. Dies hat den Vorteil, dass die Hebevorrichtung dadurch mit verschiedenen Aufsätzen für verschiedene Zwecke eingesetzt werden kann.

In einer alternativen Ausführungsform ist die Gabel fest mit der Hebevorrichtung verbunden, beispielsweise durch Schraubverbindungen. Dies ist dann vorteilhaft, wenn die Hubvorrichtung für einen bestimmten Zweck über einen längeren Zeitabschnitt eingesetzt werden soll.

In einer beispielhaften Ausführungsform ist die Misch- und Fördervorrichtung ein einziges Gerät.

Beispielsweise kann die Misch- und Fördervorrichtung einen Trichter aufweisen, in welchen die erste Komponente aus der Verpackung eingefüllt werden kann, und welcher die erste Komponente einem Mischbereich oder einer Mischkammer zuführt. Der Mischbereich bzw. die Mischkammer kann beispielsweise als dynamischer Stabmischer ausgeführt sein.

Zur Förderung des Mischgutes kann beispielsweise eine Förderschnecke eingesetzt werden.

Beispielhafte Misch- und Fördervorrichtung sind unter den Handelsnamen Mai4Ever light von Mai International GmbH, Feistritz/Drau, Österreich, oder, Inotec inoCOMB Picco Power von Inotec GmbH, Waldshut-Tiengen, Deutschland, erhältlich.

In einem alternativen Ausführungsbeispiel ist die Misch- und Fördervorrichtung als zwei separate Einheiten ausgebildet. Dabei ist eine erste Einheit zur Mischung der ersten Komponente mit der zweiten Komponente vorgesehen, und eine zweite Einheit ist zur Förderung des Mischgutes vorgesehen.

In einer bevorzugten Ausführungsform beträgt eine Gesamthöhe des Systems weniger als 225 cm, oder weniger als 220 cm, oder weniger als 215 cm, oder weniger als 210 cm, oder weniger als 205 cm, oder weniger als 200 cm.

In einer beispielhaften Ausführungsform beträgt eine Höhe der Misch- und Fördervorrichtung zwischen 70 und 150 cm, bevorzugt zwischen 80 und 140 cm, besonders bevorzugt zwischen 90 und 130 cm, besonders bevorzugt zwischen 90 und 120 cm.

Gemäß der vorliegenden Erfindung hat die Hülle der Verpackung eine Standfläche, Seitenflächen und eine Deckfläche, wobei die Hülle in der Standfläche eine Entleervorrichtung
hat, und wobei die Hülle in der Deckfläche eine Befüllvorrichtung hat.

In einer beispielhaften Ausführungsform ist die Hülle im Wesentlichen quaderförmig oder zylinderförmig.

Quader- oder zylinderförmige Hüllen haben den Vorteil, dass dadurch die Verpackung besser stapelbar ist.

In einer beispielhaften Ausführungsform liegt ein Verhältnis zwischen einer Höhe der Hülle einerseits und einer Breite und/oder Tiefe der Hülle andererseits in einem leeren Zustand zwischen 0,5 und 1,0, bevorzugt zwischen 0,6 und 0,9, besonders bevorzugt zwischen 0,65 und 0,85.

Das Vorsehen von solchen Hüllen, welche im Leerzustand eine grössere Breite und/oder Tiefe haben als eine Höhe, hat den Vorteil, dass die Verpackungen im Verhältnis zu ihrem Volumen eine geringe Höhe haben, so dass eine Gesamthöhe des Systems möglichst gering ausfällt.

In einer beispielhaften Ausführungsform liegt eine Höhe der Hülle in einem leeren Zustand zwischen 50 und 100 cm, bevorzugt zwischen 60 und 90 cm, besonders bevorzugt zwischen 65 und 85 cm.

In einer beispielhaften Ausführungsform liegt eine Breite und/oder eine Tiefe der Hülle in einem leeren Zustand zwischen 60 und 110 cm, bevorzugt zwischen 70 und 100 cm, besonders bevorzugt zwischen 80 und 100 cm.

In einem befüllten Zustand, d.h. wenn die erste Komponente in der Verpackung drin angeordnet ist, nimmt die Höhe der Hülle im Vergleich zum Leerzustand typischerweise ab, und die Breite und/oder Tiefe der Hülle nimmt im Vergleich zum Leerzustand zu.

Gemäss einem Versuch weist eine Hülle, welche in leerem Zustand eine Höhe von 78 cm und eine Breite sowie Tiefe von 88 cm auf, in einem gefüllten Zustand mit 1000 kg Trockenmörtel eine Höhe von lediglich 55 cm und eine Breite sowie Tiefe von 113 cm auf.

In einer beispielhaften Ausführungsform hat die Hülle eine Auskleidung.

In einer beispielhaften Weiterbildung umfasst die Auskleidung einen folienförmigen Kunststoff.

In einer beispielhaften Weiterbildung umfasst der folienförmige Kunststoff Polypropylen oder Polyethylen.

In einer beispielhaften Ausführungsform ist die Auskleidung mit der Hülle zumindest stellenweise verklebt.

In einer beispielhaften Weiterbildung ist die Hülle mit der Auskleidung von zumindest 10% oder zumindest 20% oder zumindest 30% oder zumindest 40% einer Oberfläche der Auskleidung verklebt.

In einer beispielhaften Weiterbildung ist die Hülle mit der Auskleidung von höchstens 90% oder höchstens 80% oder höchstens 70% oder höchstens 60% einer Oberfläche der Auskleidung verklebt.

Das Vorsehen einer solchen Auskleidung in der Hülle hat den Vorteil, dass dadurch einerseits die erste Komponente besser vor Feuchtigkeit oder anderen Umwelteinflüssen geschützt werden kann, und dass andererseits eine formstabilere Verpackung erzielt werden kann. Dies ist insbesondere deshalb von Vorteil, weil sich dadurch die Verpackung bei einer Aufhängung an der Hebevorrichtung nicht wesentlich in ihrer Höhe ausdehnt. Dies führt dazu, dass das Gesamtsystem eine möglichst geringe Gesamthöhe aufweist.

Gemäß der vorliegenden Erfindung umfasst die Aufhängevorrichtung Schlaufen, welche in einem oberen Bereich der Seitenfläche angeordnet sind.

In einer beispielhaften Ausführungsform umfasst die Aufhängevorrichtung vier Schlaufen.

Gemäß der vorliegenden Erfindung ist ein Befestigungsbereich der Schlaufen an der Hülle um 5 bis 30 cm, bevorzugt um 5 bis 25 cm, besonders bevorzugt um 10 bis 20 cm von einer Oberkante der Seitenflächen beabstandet.

Ein leichtes Versetzen nach unten der Befestigungsbereiche der Schlaufen an der Hülle hat den Vorteil, dass dadurch wiederum eine möglichst kompakte Verpackung bezüglich ihrer Höhenausdehnung erzielt werden kann.

Einzelheiten und Vorteile der Erfindung werden im Folgenden anhand von Ausführungsbeispielen und mit Bezug auf schematische Zeichnungen beschrieben.

Es zeigen:
- Fig. 1: schematische Darstellung eines Systems zur Bereitstellung von Baustoffen in Seitenansicht;
- Fig. 2: schematische Darstellung eines Systems zur Bereitstellung von Baustoffen in Draufsicht;
- Fig. 3a und 3b: schematische Darstellung einer Verpackung; und
- Fig. 4: schematische Darstellung einer beispielhaften Verpackung.

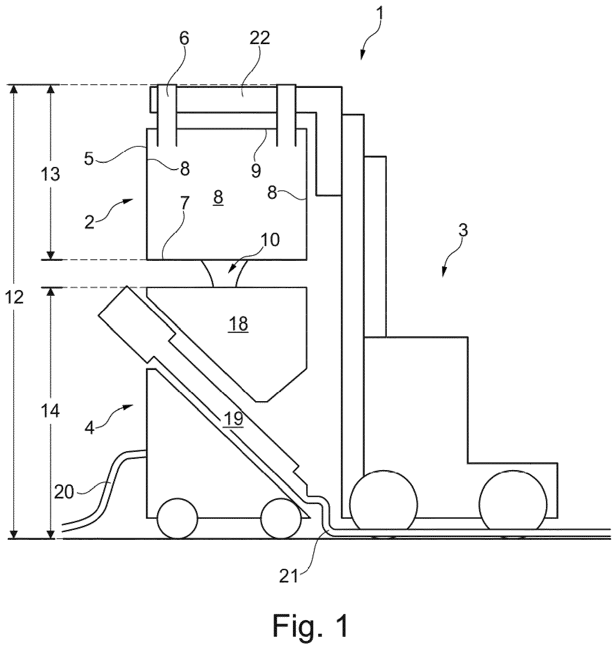

In Fig. 1 ist ein beispielhaftes und schematisch dargestelltes System 1 zur Bereitstellung von Baustoffen dargestellt. Das System 1 umfasst eine Verpackung 2, eine Hebevorrichtung 3 und eine Misch- und Fördervorrichtung 4.

In diesem Ausführungsbeispiel ist die Verpackung 2 mit einer Hülle 5 und mit einer Aufhängevorrichtung 6 ausgebildet, wobei die Hülle 5 eine im Wesentlichen quaderförmige Form aufweist. Dabei hat die Hülle 5 eine Standfläche 7, Seitenflächen 8 und eine Deckfläche 9. In der Standfläche 7 ist eine Entleervorrichtung 10 angeordnet, und in der Deckfläche 9 ist eine Befüllvorrichtung (nicht ersichtlich in dieser Darstellung) vorgesehen. Die Verpackung 2 hat dabei eine Gesamthöhe 13. In diesem Ausführungsbeispiel erstreckt sich die Gesamthöhe 13 der Verpackung 2 von der Standfläche 7 bis zu einem obersten Bereich der Aufhängevorrichtung 6.

Die Hebevorrichtung 3 ist in diesem Ausführungsbeispiel als Gabelstapler ausgeführt. Dabei umfasst die Hebevorrichtung 3 eine umgekehrte Gabel 22. Diese umgekehrte Gabel 22 hat einen beispielsweise röhrenförmigen Querschnitt, so dass die Aufhängevorrichtung 6, welche in diesem Ausführungsbeispiel als Schlaufen ausgebildet ist, auf einfache Art und Weise mit der Gabel 22 der Hebevorrichtung 3 wirkverbunden werden kann.

Durch das Verwenden einer umgekehrten Gabel 22 kann die Aufhängevorrichtung 6 der Verpackung 2 an einem höchstliegenden Bereich der Gabel 22 und auch der Hebevorrichtung 3 eingehängt werden.

Die Misch- und Fördervorrichtung 4 ist in diesem Ausführungsbeispiel als eine einzige Maschine ausgebildet. Die Misch- und Fördervorrichtung 4 umfasst dabei einen Trichter 18, eine Mischkammer 19, eine Zuleitung 20 und eine Wegleitung 21. Dabei wird die erste Komponente aus der Verpackung 2 über den Trichter 18 der Mischkammer 19 zugeführt. Unter Zugabe der zweiten Komponente durch die Zuleitung 20 wird die erste Komponente mit der zweiten Komponente in der Mischkammer 19 vermischt und sodann aus der Misch- und Fördervorrichtung 4 über die Wegleitung 21 abgeführt.

Mit einem solchen System 1 kann beispielsweise durch die Verwendung einer Zementtrockenmischung als erste Komponente und Wasser als zweite Komponente Mörtel bereitgestellt werden. Dabei benötigt dieses System 1 wenig manuellen Einsatz, hat eine hohe Durchflussrate und kann auch in Räumen mit einer Höhe von 230 cm eingesetzt werden.

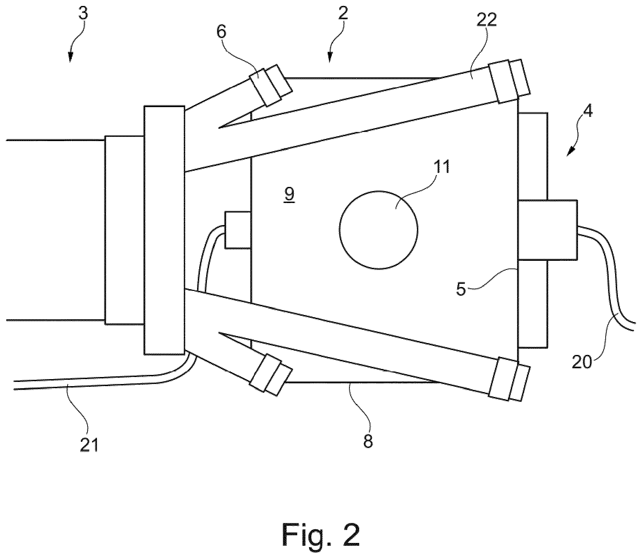

In Fig. 2 ist schematisch ein beispielhaftes System 1 zur Bereitstellung von Baustoffen in Draufsicht dargestellt. In diesem Ausführungsbeispiel umfasst die umgekehrte Gabel 22 vier Arme, wobei jeweils eine Schlaufe der Aufhängevorrichtung 6 der Verpackung 2 an einem der Arme eingehängt ist. Die Arme der Gabel 22 sind dabei so ausgebildet, dass die Verpackung 2 möglichst in ihrer Form verbleibt und nicht durch das Gewicht der ersten Komponente in die Länge gezogen wird. Dies kann insbesondere dadurch erreicht werden, indem die jeweiligen Aufhängeorte an den Armen der Gabel 22 etwas weiter voneinander beabstandet sind als die Schlaufen der Aufhängevorrichtung 6, sodass die Verpackung 2 in der Tendenz in Richtung ihrer Breite und Tiefe leicht auseinandergezogen wird.

Eine solche Gabel 22 mit vier Armen hat den Vorteil, dass Hebevorrichtung 3 bei einer Aufnahme einer neuen Verpackung 2 im Wesentlichen von oben her an die Aufhängevorrichtung 6 der Verpackung 2 herangeführt werden kann. Nachdem die Gabel 22 von oben herab neben den Schlaufen der Aufhängevorrichtung 6 positioniert wird, können die Schlaufen über die Arme der Gabel 22 gelegt werden, ohne dass dabei die Hebevorrichtung 3 bewegt werden muss, weder horizontal noch vertikal. Dies erleichtert die Handhabung von Verpackungen 2 durch die Hebevorrichtung 3 wesentlich, sodass dieser Vorgang ohne weiteres effizient von einer Person durchgeführt werden kann. Insbesondere in engen Räumen ist dies von Vorteil, weil weniger Platz zum Rangieren benötigt wird.

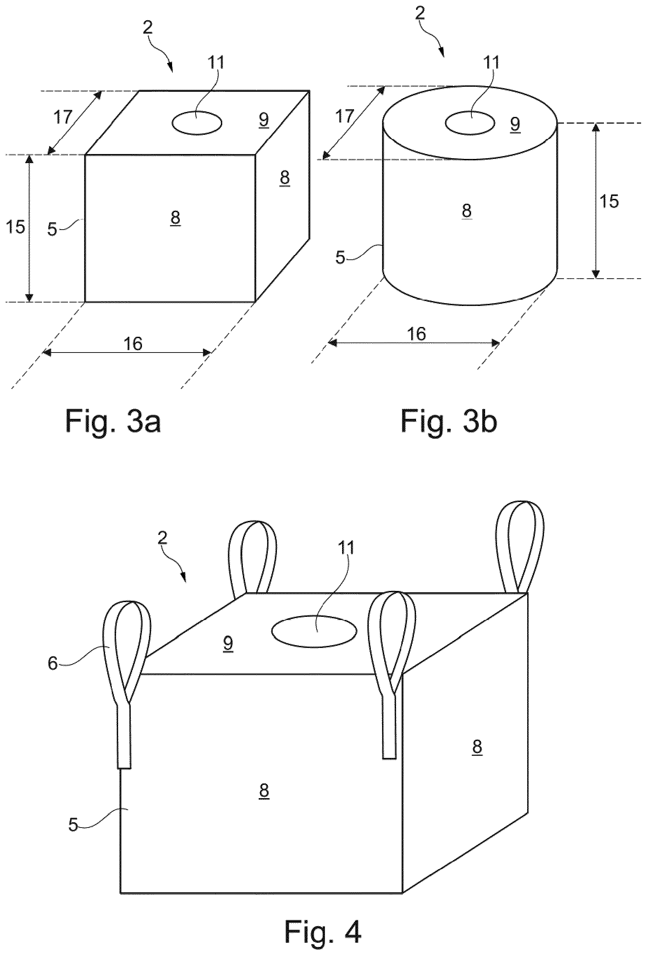

In den Fig. 3a und 3b sind schematisch zwei unterschiedliche Verpackungen 2 dargestellt. Die Verpackung 2 in der Fig. 3a ist dabei quaderförmig, und die Verpackung 2 in Fig. 3b ist zylinderförmig ausgebildet. Die Verpackungen 2 haben jeweils eine Deckfläche 9 mit einer Befüllvorrichtung 11, Seitenwände 8 und eine Standfläche mit einer Entleervorrichtung (in dieser Darstellung nicht ersichtlich). Dabei haben die Verpackungen 2 eine Hüllenbreite 16, eine Hüllenhöhe 15 und eine Hüllentiefe 17.

In Fig. 4 ist eine Verpackung 2 mit einer Hülle 5 und mit einer Aufhängevorrichtung 6 dargestellt. Die Aufhängevorrichtung 6 in diesem Ausführungsbeispiel umfasst vier Schlaufen, welche jeweils in einem oberen Bereich der Hülle 5 und jeweils im Bereich der Kanten zwischen zwei Seitenflächen 8 angeordnet sind. Um eine Gesamthöhe der Verpackung 2 möglichst klein zu halten, ist ein Befestigungsbereich der Aufhängevorrichtungen 6 an der Hülle 5 um einen gewissen Abstand von einer Oberkante der Seitenfläche beabstandet.

### Bezugszeichenliste

- 1: System
- 2: Verpackung
- 3: Hebevorrichtung
- 4: Misch- und Fördervorrichtung
- 5: Hülle
- 6: Aufhängevorrichtung
- 7: Standfläche
- 8: Seitenfläche
- 9: Deckfläche
- 10: Entleervorrichtung
- 11: Befüllvorrichtung
- 12: Gesamthöhe des Systems
- 13: Gesamthöhe der Verpackung
- 14: Höhe der Misch- und Fördervorrichtung
- 15: Hüllenhöhe
- 16: Hüllenbreite
- 17: Hüllentiefe
- 18: Trichter
- 19: Mischkammer
- 20: Zuleitung
- 21: Wegleitung
- 22: umgekehrte Gabel

## Patentansprüche

1. System zur Bereitstellung von Baustoffen, das System (1) umfassend:
eine Verpackung (2) mit einer darin angeordneten ersten Komponente, wobei die Verpackung eine Hülle (5) und eine Aufhängevorrichtung (6) umfasst, wobei die Hülle (5) eine Standfläche (7), Seitenflächen (8) und eine Deckfläche (9) hat, und wobei in der Standfläche (7) eine Entleervorrichtung (10) und in der Deckfläche (9) eine Befüllvorrichtung (11) ausgebildet ist, wobei die Aufhängevorrichtung (6) Schlaufen umfasst, welche in einem oberen Bereich der Seitenfläche (8) angeordnet sind;
eine Hebevorrichtung (3), wobei die Verpackung (2) an deren Aufhängevorrichtung (6) mit der Hebevorrichtung (3) wirkverbindbar ist und durch diese im Raum verschiebbar ist;
eine zweite Komponente; und
eine Misch- und Fördervorrichtung (4), in welcher die erste Komponente mit der zweiten Komponente vermischbar ist und durch welche der Baustoff förderbar ist;
**dadurch gekennzeichnet, dass**
die Verpackung (2) mit der ersten Komponente derart von der Hebevorrichtung (3) über die Misch- und Fördervorrichtung (4) positionierbar ist, dass eine Gesamthöhe (12) des Systems (1) weniger als 230 cm beträgt und dass ein Befestigungsbereich der Schlaufen an der Hülle (5) um 5 bis 30 cm von einer Oberkante der Seitenflächen (8) beabstandet ist.

2. System nach Anspruch 1, wobei die erste Komponente ein Trockenprodukt oder eine Trockenmischung ist und wobei die zweite Komponente ein Flüssigprodukt oder eine Flüssigmischung ist.

3. System nach Anspruch 2, wobei die erste Komponente Zement umfasst, und wobei die zweite Komponente Wasser umfasst, so dass als Mischprodukt Mörtel erhältlich ist.

4. System nach einem der vorhergehenden Ansprüche, wobei die Hebevorrichtung (3) eine umgekehrte Gabel (22) umfasst, so dass die Aufhängevorrichtung (6) an einem höchstliegenden Bereich der Gabel (22) einhängbar ist.

5. System nach einem der vorhergehenden Ansprüche, wobei die Hebevorrichtung (3) ein Gabelstapler oder ein Hubwagen ist.

6. System nach einem der vorhergehenden Ansprüche, wobei die Hülle (5) im Wesentlichen quaderförmig oder zylinderförmig ist.

7. System nach einem der vorhergehenden Ansprüche, wobei ein Verhältnis zwischen einer Hüllenhöhe (15) einerseits und einer Hüllenbreite (16) und/oder Hüllentiefe (17) andererseits zwischen 0,6 und 1,0, bevorzugt zwischen 0,7 und 1,0, besonders bevorzugt zwischen 0,8 und 0,95 liegt.

8. System nach einem der vorhergehenden Ansprüche, wobei eine Hüllenhöhe (15) zwischen 50 und 100 cm, bevorzugt zwischen 60 und 90 cm, besonders bevorzugt zwischen 65 und 85 cm liegt, und eine Hüllenbreite (16) und/oder Hüllentiefe (17) zwischen 60 und 110 cm, bevorzugt zwischen 70 und 100 cm, besonders bevorzugt zwischen 80 und 100 cm liegt.

9. System nach einem der vorhergehenden Ansprüche, wobei die Hülle (5) eine Auskleidung hat.

10. System nach Anspruch 9, wobei die Auskleidung einen folienförmigen Kunststoff umfasst, und/oder wobei die Auskleidung mit der Hülle (5) zumindest teilweise verklebt ist.

11. System nach einem der vorhergehenden Ansprüche, wobei die Aufhängevorrichtung (6) vier Schlaufen umfasst.

## Claims

1. System for providing building materials, the system (1) comprising:
a package (2) with a first component arranged therein, wherein the package comprises an envelope (5) and a hanging device (6), wherein the envelope (5) has a standing face (7), side faces (8) and a top face (9), and wherein an emptying device (10) is formed in the standing face (7) and a filling device (11) is formed in the top face (9), wherein the hanging device (6) comprises loops which are arranged in an upper region of the side face (8) ;
a lifting device (3), wherein the package (2) is able to be operatively connected to the lifting device (3) by its hanging device (6) and is movable in space by said lifting device (3);
a second component; and
a mixing and conveying device (4) in which the first component is able to be mixed with the second component and by means of which the building material is able to be conveyed;
**characterized in that**
the package (2) with the first component is able to be positioned over the mixing and conveying device (4) by the lifting device (3) such that an overall height (12) of the system (1) is less than 230 cm, and **in that** a fastening region of the loops on the envelope (5) is 5 to 30 cm away from an upper edge of the side faces (8).

2. System according to Claim 1, wherein the first component is a dry product or a dry mixture and wherein the second component is a liquid product or a liquid mixture.

3. System according to Claim 2, wherein the first component comprises cement and wherein the second component comprises water, such that mortar is obtainable as mixed product.

4. System according to any of the preceding claims, wherein the lifting device (3) comprises an inverted fork (22) such that the hanging device (6) is able to be hung on an uppermost region of the fork (22).

5. System according to any of the preceding claims, wherein the lifting device (3) is a forklift truck or a pallet truck.

6. System according to any of the preceding claims, wherein the envelope (5) is substantially cuboidal or cylindrical.

7. System according to any of the preceding claims, wherein a ratio between an envelope height (15) for the one part and an envelope width (16) and/or envelope depth (17) for the other part is between 0.6 and 1.0, preferably between 0.7 and 1.0, particularly preferably between 0.8 and 0.95.

8. System according to any of the preceding claims, wherein an envelope height (15) is between 50 and 100 cm, preferably between 60 and 90 cm, particularly preferably between 65 and 85 mc, and an envelope width (16) and/or envelope depth (17) is between 60 and 110 cm, preferably between 70 and 100 cm, particularly preferably between 80 and 100 cm.

9. System according to any of the preceding claims, wherein the envelope (5) has a lining.

10. System according to Claim 9, wherein the lining comprises a plastic in the form of a film, and/or wherein the lining is at least partially adhesively bonded to the envelope (5).

11. System according to any of the preceding claims, wherein the hanging device (6) comprises four loops.

## Revendications

1. Système pour la fourniture de matériaux de construction, le système (1) comprenant :
un emballage (2) avec un premier composant agencé à l'intérieur, l'emballage (2) comprenant une enveloppe (5) et un dispositif de suspension (6), l'enveloppe (5) ayant une surface de support (7), des surfaces latérales (8) et une surface de recouvrement (9), et un dispositif de vidage (10) étant formé dans la surface de support (7) et un dispositif de remplissage (11) étant formé dans la surface de recouvrement (9), le dispositif de suspension (6) comprenant des boucles qui sont agencées dans une zone supérieure de la surface latérale (8) ;
un dispositif de levage (3), l'emballage (2) pouvant être relié fonctionnellement au dispositif de levage (3) au niveau de son dispositif de suspension (6) et pouvant être déplacé dans l'espace par celui-ci ;
un deuxième composant ; et
un dispositif de mélange et de transport (4), dans lequel le premier composant peut être mélangé avec le deuxième composant et par lequel le matériau de construction peut être transporté ;
**caractérisé en ce que**
l'emballage (2) avec le premier composant peut être positionné par le dispositif de levage (3) au-dessus du dispositif de mélange et de transport (4) de telle sorte qu'une hauteur totale (12) du système (1) est inférieure à 230 cm et **en ce qu'**une zone de fixation des boucles sur l'enveloppe (5) est espacée de 5 à 30 cm d'un bord supérieur des surfaces latérales (8).

2. Système selon la revendication 1, dans lequel le premier composant est un produit sec ou un mélange sec et dans lequel le deuxième composant est un produit liquide ou un mélange liquide.

3. Système selon la revendication 2, dans lequel le premier composant comprend du ciment et dans lequel le deuxième composant comprend de l'eau, de telle sorte que du mortier peut être obtenu en tant que produit mélangé.

4. Système selon l'une quelconque des revendications précédentes, dans lequel le dispositif de levage (3) comprend une fourche inversée (22), de telle sorte que le dispositif de suspension (6) peut être accroché à une zone la plus haute de la fourche (22).

5. Système selon l'une quelconque des revendications précédentes, dans lequel le dispositif de levage (3) est un chariot élévateur à fourche ou un gerbeur.

6. Système selon l'une quelconque des revendications précédentes, dans lequel l'enveloppe (5) est essentiellement parallélépipédique ou cylindrique.

7. Système selon l'une quelconque des revendications précédentes, dans lequel un rapport entre une hauteur d'enveloppe (15) d'une part et une largeur d'enveloppe (16) et/ou une profondeur d'enveloppe (17) d'autre part est compris entre 0,6 et 1,0, de préférence entre 0,7 et 1,0, de manière particulièrement préférée entre 0,8 et 0,95.

8. Système selon l'une quelconque des revendications précédentes, dans lequel une hauteur d'enveloppe (15) est comprise entre 50 et 100 cm, de préférence entre 60 et 90 cm, de manière particulièrement préférée entre 65 et 85 cm, et une largeur d'enveloppe (16) et/ou une profondeur d'enveloppe (17) est comprise entre 60 et 110 cm, de préférence entre 70 et 100 cm, de manière particulièrement préférée entre 80 et 100 cm.

9. Système selon l'une quelconque des revendications précédentes, dans lequel l'enveloppe (5) a un revêtement.

10. Système selon la revendication 9, dans lequel le revêtement comprend une matière plastique en forme de feuille et/ou dans lequel le revêtement est au moins partiellement collé à l'enveloppe (5).

11. Système selon l'une quelconque des revendications précédentes, dans lequel le dispositif de suspension (6) comprend quatre boucles.
